Europäisches Patentamt

European Patent Office

Office européen des brevets

(11) Veröffentlichungsnummer: **0 029 571**
**B1**

# EUROPÄISCHE PATENTSCHRIFT

(45) Veröffentlichungstag der Patentschrift:
**18.04.84**

(51) Int. Cl.³: **H 02 G  15/013,** H 02 G  15/10

(21) Anmeldenummer: **80107131.7**

(22) Anmeldetag: **17.11.80**

(54) **Muffenkopf für längsgeteilte Kabelgarnituren.**

(30) Priorität: **22.11.79 DE 2947139**

(43) Veröffentlichungstag der Anmeldung:
**03.06.81 Patentblatt 81/22**

(45) Bekanntmachung des Hinweises auf die Patenterteilung:
**18.04.84 Patentblatt 84/16**

(84) Benannte Vertragsstaaten:
**AT BE CH DE FR GB IT LI NL SE**

(56) Entgegenhaltungen:
**DE - A - 2 005 307
DE - A - 2 209 629
DE - B - 2 601 811
FR - A - 818 334
FR - A - 1 334 397
FR - A - 2 388 432**

(73) Patentinhaber: **SIEMENS AKTIENGESELLSCHAFT,
Berlin und München Wittelsbacherplatz 2,
D-8000 München 2 (DE)**

(72) Erfinder: **Kunze, Dieter, Dipl.-Ing., Rosenstrasse 10,
D-8021 Neuried (DE)**

Muffenkopf für längsgeteilte Kabelgarnituren

Die Erfindung betrifft einen Muffenkopf für längsgeteilte Kabelgarnituren mit Stützkörper und mit mindestens einer als Kabeleinführung ausgebildeten Ausstülpung aus wärmeschrumpfbarem Material, wobei im Übergangsbereich zwischen Ausstülpung und zylindrischer Muffenkopfwandung eine in Achsrichtung verlaufende, gemeinsame Trennfuge zum Einführen eines Kabels ausgebildet ist, wobei die Breite des Öffnungsbereiches so gross ist, dass das einzuführende Kabel in einrastender Weise einsetzbar ist.

Bei Kabelgarnituren werden vielfach die Kabeleinführungen in gesonderten Stirnbereichen, den sogenannten Muffenköpfen, vorgenommen. Eine derartige Kabelmuffe wird in der DE-OS-2 731 578 beschrieben. Sie besteht aus Muffenköpfen, die jeweils mit mindestens einem als Ausstülpung ausgebildeten Kabeleingang versehen sind und die über einen Kunststoffschrumpfschlauch miteinander verbunden bzw. überdeckt werden. Die Muffenköpfe sind nur im Bereich der Kabeleingänge schrumpfbar und weisen einen geteilten Stützmantel auf, mit dem die Verbindungsränder bzw. die Stege entlang der Trennfuge des Muffenkopfes zusammengehalten werden. Das Einlegen eines Kabels in den Kabeleingang erfolgt, besonders bei ungeschnittenen Kabeln über die aufgeweitete Trennfuge entlang einer Mantellinie der Ausstülpung. Es lässt sich wohl vorstellen, dass beim Einlegen von Kabeln, besonders mit grossen Durchmessern, erhebliche Schwierigkeiten auftreten können, da die Trennfuge nicht beliebig weit geöffnet werden kann. Diese Schwierigkeit wird grösser, wenn mehrere Kabel im gleichen Muffenkopf eingeführt werden müssen. Ein Aufweiten bzw. Zurückbiegen der Ränder entlang der Trennfugen ist dann wohl kaum mehr in beliebiger Weise möglich. In der FR-A-2 388 432 wird eine Kabelmuffe beschrieben, die dem vorstehenden Ausführungsbeispiel in gewisser Beziehung ähnlich ist; denn auch hier sind entlang der Kabeleinführungen Trennfugen angeordnet, die ein einrastendes Einführen der Kabel erlauben. Doch auch hier sind die Trennfugen so eng ausgebildet, dass bei grossen Kabeln das Einführen erschwert wird. Nach dem Einlegen der Kabel werden auch hier die Randbereiche der Trennfugen zusammengebracht und abgedichtet. Weiterhin könnten unter Umständen weitere Komplikationen bei der Abdichtung der Trennfuge nahe dem Kabel auftreten; denn hier sind im Stegbereich der Trennfuge nahe dem Kabel die Schrumpfkräfte in verstärktem Masse wirksam. Auf diese Weise ist ein Auseinanderziehen der unteren Stegbereiche denkbar und Undichtigkeiten entlang der Trennfuge sind dann die Folge.

Der Erfindung lag nun die Aufgabe zugrunde, das Einführen von Kabeln im Einführungsbereich der Muffenköpfe zu erleichtern und die Abdichtung entlang der Trennfugen in den Kabeleingängen zu verbessern. Die gestellte Aufgabe wird nun an den Muffenköpfen dadurch gelöst, dass die Trennfuge jeder Kabeleinführung als längsverlaufender, breiter Öffnungsbereich mit nicht zusammenführbaren Randbereichen ausgebildet ist und dass ein in der Breite angepasstes Füllstück in jedem Öffnungsbereich angeordnet ist.

Das Wesentliche ist an der Erfindung darin zu sehen, dass das jeweils einzuführende Kabel unter geringem Kraftaufwand durch die gemeinsame längsseitige Trennfuge von Kabeleinführung und Muffenkopf eingeführt werden kann. Dabei ist wichtig, dass nur eine sehr geringe Aufweitung der Trennfuge nötig ist, um die Kabel in die als Ausstülpungen ausgebildeten Kabeleinführungen einzubringen. Eine zu grosse Aufweitung, wie dies zum Beispiel bei Trennfugen mit aneinander liegenden Rändern der Fall sein müsste, ist bei mehreren Kabeleinführungen in einem Muffenkopf infolge der Steifigkeit kaum mehr möglich. Dieses Problem entfällt bei den Muffenköpfen nach der Erfindung, da die Trennfugen im Öffnungsbereich so weit ausgebildet sind, dass die Kabel mehr oder weniger einrastend eingeführt werden können. In diese Öffnungsbereiche werden anschliessend angepasste Füllstücke eingebracht.

Wie in den Ausführungsformen dargestellt, wird die Montage noch wesentlich erleichtert, wenn die einzuführenden Kabel bereits vor dem Einführen mit den Füllstücken versehen werden. So wird das Füllstück mit Hilfe eines Spannbandes oder ähnlichem auf dem Kabel in der entsprechenden Lage festgeklemmt. Hierdurch werden auch zusätzliche Massnahmen bezüglich der Abfangung oder der Verbindung von Schirmen wesentlich vereinfacht. Dies ist in einfacher Weise an den Füllstücken möglich, da mit der Verklemmung auf dem Kabel gleichzeitig die Verbindung mit der Bewehrung oder den Schirmen der Kabel vorgenommen werden kann. Die Füllstücke weisen ausserdem Befestigungsmöglichkeiten zum Anschluss von Verbindungsleitungen oder auch von Verbindungsschienen auf, mit deren Hilfe auch eine Verbindung zwischen den stirnseitigen Muffenköpfen hergestellt werden kann. Diese Massnahme dient einerseits der elektrischen Durchverbindung und andererseits auch der mechanischen Überbrückung von Zug- und Druckkräften. Durch die Anordnung des mit dem Kabel fest verbundenen Füllstückes im Öffnungsbereich der Kabeleinführung werden weiterhin in vorteilhafter Weise eventuelle Torsionskräfte im Einführungsbereich abgefangen, so dass der Dichtungsbereich hiermit ebenfalls kaum belastet wird. Die Füllstücke werden mit Hilfe von dichtenden Klebemitteln, die vorteilhafter Weise bei Wärmeeinwirkung aktiviert werden, in den Öffnungsbereich mit der Muffenkopfwandung und der Wandung der als Ausstülpung ausgebildeten Kabeleinführung verbunden bzw. verschmolzen. Hier ist besonders vorteilhaft, wenn die Füllstücke selbst bereits mit dem entsprechenden Material beschichtet sind, so dass dieses bei Wärmeeinwirkung, die sowieso zum Schrumpfen der Kabeleinführungen benötigt wird, sofort mit eingeschmolzen wird. Der Einschmelzvorgang lässt sich verbessern, wenn die Füllstücke aus Metall sind, da dann eine besonders gute Wärmeleitung auch in die innen liegenden und daher schwer zugänglichen Bereiche erfolgt. Diese Muffenköpfe können sowohl bei Verwendung von schrumpfbaren wie auch von mechanisch verklemmbaren Muffenzylindern eingesetzt werden. Im ersten Fall ist kaum eine Fixierung des Muffenkopfes selbst nötig, doch empfiehlt sich eine geringe Sicherung, zum Beispiel durch einen Drahtbund am äusseren Umfang, um eine Beschädigung der Dichtungssysteme beim späteren Wiederöffnen des Muffenzylinders zu verhindern. Beim Einsatz von mechanisch verklemmbaren Muffenzylindern mit einer längsseitigen Klemmvorrichtung wird zwischen den Muffenköpfen und diesem Muffenzylinder zweckmässigerweise ein Dichtungssystem aus flanschartigen Umfassungen auf dem äusseren Umfang der Muffenköpfe vorgesehen. Dabei sind diese Umfassungen mit Dichtungsnuten versehen, in welche Dichtungsmittel eingelegt werden. Hierüber wird schliesslich der Muffenzylinder verklemmt. Damit ist ebenfalls gewährleistet, dass beim Wiederöffnen des Muffenzylinders die Dichtungssysteme in den Muffenköpfen unberührt bleiben.

Die Erfindung wird nun anhand von fünf Figuren näher erläutert.

Fig. 1 zeigt die komplett montierte Kabelmuffe,

Fig. 2 zeigt die Stirnseite eines Muffenkopfes,

Fig. 3 erläutert den Einsatz einer flanschartigen Umfassung des Muffenkopfes im Querschnitt,

Fig. 4 zeigt die dazugehörige Verschraubung und in

Fig. 5 ist der Verschlussbereich der flanschartigen Umfassung dargestellt.

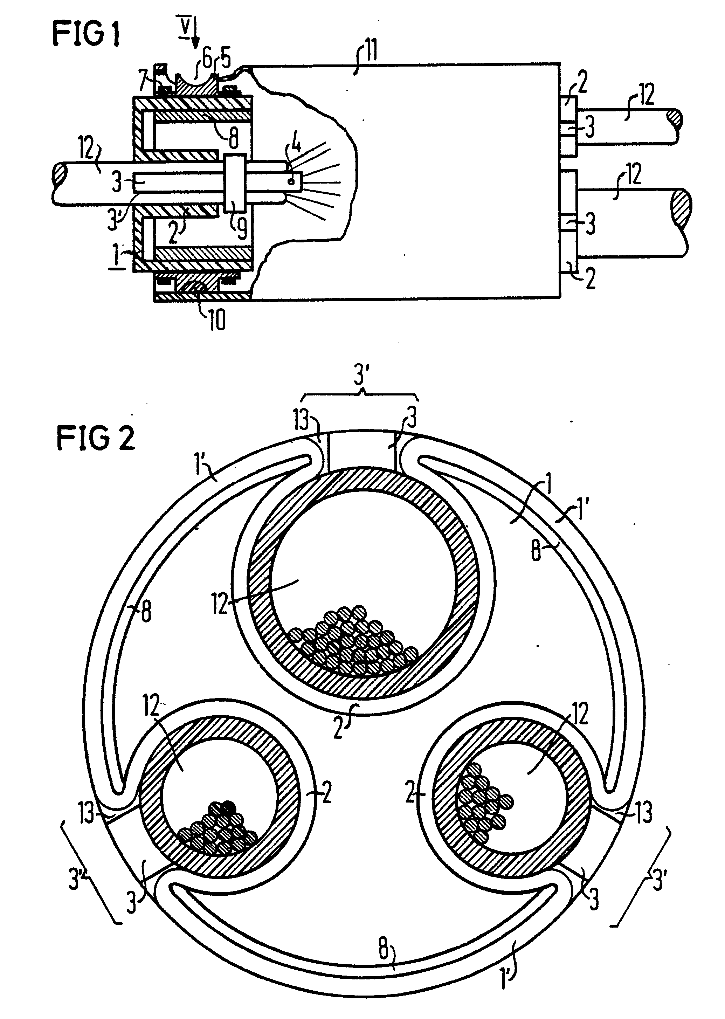

Der Einführungsbereich des Muffenkopfes 1 wird durch das Teilschnittbild der in Fig. 1 dargestellten Kabelmuffe 11 verdeutlicht. Hier wird in die als Ausstülpung ausgebildete Kabeleinführung 2 ein Kabel 12 eingeführt. Die Ausstülpung ist hier nach innen ausgebildet, doch ist ebenso die Ausstülpung nach aussen möglich, wobei alle anderen Gegebenenheiten gleich sind. Der Öffnungsbereich 3' der Trennfuge wird in dieser Figur durch das darüber liegende Füllstück 3 überdeckt, welches diesen voll ausfüllt. Das Füllstück 3 ist vor dem Einführen des Kabels 12 mit Hilfe einer Klemmvorrichtung 9, zum Beispiel einem Spannband, auf dem Kabel 12 festgeklemmt worden. Am Ende des Füllstückes 3 sind Vorrichtungen 4 zum Befestigen von Bewehrung, Schirmen oder Verbindungsschienen angeordnet. Es ist jedoch auch möglich, das Füllstück so lange auszubilden, dass es gleichzeitig als Verbindungsschiene zu verwenden ist und somit auf den zweiten Muffenkopf übergreift. Ins Innere des Muffenkopfes 1 ist ein Stützkörper 8, der vorzugsweise aus Metall besteht, eingebracht, um dem Muffenkopf 1 den nötigen Halt zu geben. Im dargestellten Beispiel wird ein Muffenzylinder 11 gezeigt, der gegen den Muffenkopf 1 über flanschartige Umfassungen 5 abgedichtet wird. Im Querschnitt wird die Dichtungsnut 6 erkennbar, in welche Dichtungsmaterial 10 zur Abdichtung gegen den Muffenzylinder 11 eingelegt wird. Die Abdichtung gegen den jeweiligen Muffenkopf 11 wird durch eine Zwischenlage aus Klebe- bzw. Dichtungsmittel zwischen der flanschartigen Umfassung 5 und der Aussenfläche des Muffenkopfes 1 vorgenommen. Die flanschartige Umfassung 5 selbst wird durch Spannbänder 7 auf den Muffenkopf 1 gepresst. Damit ist gewährleistet, dass bei einem Öffnen des Muffenzylinders die Dichtungssysteme in den Muffenköpfen 1 unberührt bleiben. Der Muffenzylinder 11 dieses Ausführungsbeispiels wird nach vollendeter Montage der Muffenköpfe 1 und der flanschartigen Umfassungen 5 aufgezogen und durch seine hier nicht sichtbaren Längsverschlüsse mechanisch verklemmt und damit auf die flanschartigen Dichtungssysteme der Muffenköpfe 1 gepresst.

In Fig. 2 werden nun die Verhältnisse in den Öffnungsbereichen 3' der Trennfugen an den als Ausstülpungen ausgebildeten Kabeleinführungen 2 eines Muffenkopfes 1 ersichtlich. Hieraus geht zunächst hervor, dass die Wandung 1' des Muffenkopfes 1 direkt in die Wandungen der Kabeleinführungen 2 übergehen. Ein stegartiger Verschlussbereich zwischen Muffenkopfwandung 1' und den Kabeleinführungen 2 ist somit nicht vorhanden und der Stützkörper 8 hintergreift somit unmittelbar diesen gemeinsamen Öffnungsbereich, so dass eine Abwanderung der Wandung der Kabeleinführungen 2 nahe dem Kabel 12 infolge von Schrumpfkräften nicht möglich ist. Beim Schrumpfen der Kabeleinführungen 2 wird somit das Kabel 12 gegen den zylindrischen Teil des Muffenkopfes 1 gedrückt, da die Muffenkopfwandung 1' durch den Stützkörper 8 fixiert ist. In den Öffnungsbereichen 3' der längsverlaufenden Trennfugen sind nun die Füllstücke 3 angeordnet, die den vollen Öffnungsbereich 3' der Trennfugen ausfüllen und zusammen mit dem eingeschmolzenen Klebemittel 13 einendichten Abschluss bilden. Der äussere Umfang des Muffenkopfes 1 kann entsprechend seinem weiteren Einsatz von geeigneten Umfassungen, wie Spannband oder Drahtbund umspannt werden, woraus sich zusätzlich eine Festigung des Muffenkopfes 1 ergibt. die Füllstücke 3 bestehen vorzugsweise aus Metall, so dass eine besonders gute Wärmeleitung für die Einschmelzung des Dichtungsmittels 13 zu den innen liegenden Bereichen gewährleistet wird.

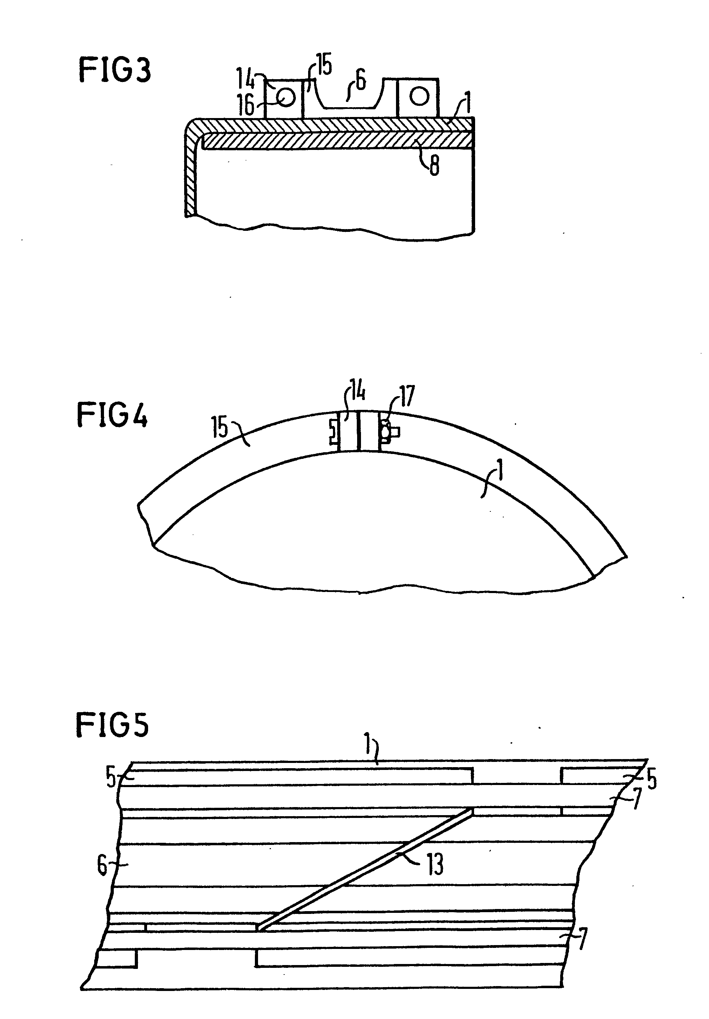

In Fig. 3 ist eine flanschartige Umfassung 15 auf dem äusseren Umfang des Muffenkopfes 1 dargestellt. Diese Umfassung 15 ist mit einer umlaufenden Nut 6 versehen, in welche Dichtungsmaterial zum Abdichten gegen den Muffenzylinder eingelegt wird. Die Umfassung 15 ist zweckmässigerweise quergestellt und an den Enden zum gegenseitigen Verschrauben mit Ansätzen 14 versehen, so dass die einzelnen Teile mittels Schrauben 17 durch die Löcher 16 gegeneinander verspannt werden können. Der im Inneren des Muffenkopfes 1 eingesetzte Stützkörper 8 bildet somit auch ein Widerlager für die aussen aufgespannte Umfassung 15.

Die Fig. 4 verdeutlicht diese Verspannung durch eine stirnseitige Ansicht des Muffenkopfes 1, wobei die gegenseitige Verschraubung deutlich wird.

Die Fig. 5 veranschaulicht die Umfassung 5, welche in Fig. 1 angedeutet ist. Auf dem Umfang des Muffenkopfes 1 sind die quergestellten Umfassungen 5 mit Hilfe von Spannbändern 7 aufgezogen. In der Mitte dieser Umfassungen 5 ist wiederum die Dichtungsnut 6 zur Aufnahme von Dichtungsmitteln angeordnet, über die die Abdichtung zum Muffenzylinder erfolgt. Die Querteilung der flanschartigen Umfassungen 5 ist jedoch in diesem Falle in einem Winkel zur Umfangsrichtung ausgeführt, um eventuelle Umfangstoleranzen ausgleichen zu können. Diese Toleranzen werden hier durch entsprechende Querverschiebung beim Verspannen der Umfassungen 5 ausgeglichen. In die Teilungsebene der Umfassungen 5 kann ebenfalls Dichtungsmittel 13 zur Abdichtung eingeleitet werden.

**Patentansprüche**

1. Muffenkopf (1) für längsgeteilte Kabelgarnituren mit Stützkörper (8) und mit mindestens einer als Kabeleinführung (2) ausgebildeten Ausstülpung aus wärmeschrumpfbarem Material, wobei im Übergangsbereich zwischen Ausstülpung und zylindrischer Muffenkopfwandung (1') eine in Achsrichtung verlaufende, gemeinsame Trennfuge zum Einführen eines Kabels (12) ausgebildet ist, wobei die Breite des Öffnungsbereiches (3') so gross ist, dass das einzuführende Kabel (12) in einrastender Weise einsetzbar ist, dadurch gekennzeichnet, dass die Trennfuge jeder Kabeleinführung (2) als längsverlaufender, breiter Öffnungsbereich (3') mit nicht zusammenführbaren Randbereichen ausgebildet ist und dass ein in der Breite angepasstes Füllstück (3) in jedem Öffnungsbereich (3') angeordnet ist.

2. Muffenkopf nach Anspruch 1, dadurch gekennzeichnet, dass das Füllstück (3) auf dem Kabel (12) fixiert ist.

3. Muffenkopf nach einem der vorhergehenden Ansprüche, dadurch gekennzeichnet, dass das Füllstück (3) aus Metall besteht.

4. Muffenkopf nach einem der vorhergehenden Ansprüche, dadurch gekennzeichnet, dass das Füllstück (3) eine Beschichtung aus dichtenden Klebemitteln (13) aufweist.

5. Muffenkopf nach einem der vorhergehenden Ansprüche, dadurch gekennzeichnet, dass das Füllstück (3) Befestigungsmöglichkeiten (4) für Kabelabfangungen oder Kabelschirme aufweist.

6. Muffenkopf nach einem der vorhergehenden Ansprüche, dadurch gekennzeichnet, dass das Füllstück (3) befestigungsmöglichkeiten (4) für Verbindungsschienen zwischen den Muffenköpfen (1) aufweist.

7. Muffenkopf nach einem der vorhergehenden Ansprüche, dadurch gekennzeichnet, dass Spannmittel (5, 15) auf seiner zylindrischen Aussenfläche angeordnet sind.

8. Muffenkopf nach einem der vorhergehenden Ansprüche, dadurch gekennzeichnet, dass der überspannende Muffenzylinder (11) aus schrumpfbarem Material besteht.

9. Muffenkopf nach einem der Ansprüche 1 bis 7, dadurch gekennzeichnet, dass der überspannende Muffenzylinder (11) aus nicht schrumpfbarem Material besteht.

10. Muffenkopf nach Anspruch 9, dadurch gekennzeichnet, dass flanschartige Umfassungen (5, 15) mit radial nach aussen gerichteter Dichtungsnut (6) zum Einführen von Dichtungsmitteln (10) für die Abdichtung gegen ein übergespanntes zylindrisches Muffenrohr (11) auf seiner zylindrischen Aussenfläche angeordnet sind.

11. Muffenkopf nach Anspruch 10, dadurch gekennzeichnet, dass die Enden der flanschartigen Umfassungen (5) quer zur Umfassungsrichtung abgeschrägt sind.

**Claims**

1. A sleeve head (1) for longitudinally-divided cable fittings having supporting bodies (8) and at least one protrusion which consists of a heat-shrinkable material and is formed as a cable inlet (2), in which in the transition region between the protrusion and the cylindrical wall (1') of the sleeve head, there is formed a common axial separating slot for leading in a cable (12), the width of the opening region (3') being so large that the cable (12) to be led in, can be snapped in, characterised in that the separating slot of each cable inlet (2) is in the form of a longitudinal, wide opening region (3') having edge zones which cannot be brought together; and that a filling piece (3) matched to the width is arranged in each opening region (3').

2. A sleeve head according to claim 1, characterised in that the filling piece (3) is fixed on the cable (12).

3. A sleeve head according to one of the preceding claims, characterised in that the filling piece (3) consists of metal.

4. A sleeve head according to one of the preceding claims, characterised in that the filling piece (3) has a coating of sealing adhesives (13).

5. A sleeve head according to one of the preceding claims, characterised in that the filling piece (3) has fastening means (4) for cable grips or cable screens.

6. A sleeve head according to one of the preceding claims, characterised in that the filling piece (3) has fastening means (4) for connection strips between the sleeve heads (1).

7. A sleeve head according to one of the preceding claims, characterised in that clamping means (5, 15) are arranged on its cylindrical outer surface.

8. A sleeve head according to one of the preceding claims, characterised in that the bridging sleeve cylinder (11) consists of a shrinkable material.

9. A sleeve head according to one of claims 1 to 7, characterised in that the bridging sleeve cylinder (11) consists of a non-shrinkable material.

10. A sleeve head as claimed in claim 9, characterised in that flange-shaped surrounding elements (5, 15), having a sealing groove (6) which is outwardly radially directed and which serves for the introduction of sealing means (10) for sealing against a bridging cylindrical sleeve tube (11), are arranged on the cylindrical outer surface of the sleeve head.

11. A sleeve head according to claim 10, characterised in that the ends of the flange-shaped surrounding elements (5) are bevelled transversely to the surrounding direction.

**Revendications**

1. Tête de manchon (1) pour accessoires de câble fendus longitudinalement, comprenant un corps d'appui (8) et au moins une protubérance, en matériau rétractable à la chaleur, agencée en entrée de câble (2), une rainure de séparation commune, destinée à l'introduction d'un câble (12) et s'étendant suivant la direction axiale, étant formée dans la région de transition entre la protubérance et la paroi cylindrique (1') de la tête de manchon, la largeur de la région d'ouverture (3') étant si grande que le câble (12) à introduire peut y être mis par encliquetage, caractérisé en ce que la rainure de chaque entrée de câble (2) est agencée en une région d'ouverture (3') large, s'étendant longitudinalement et ayant des régions marginales ne pouvant pas être rassemblées et en ce qu'une pièce de remplissage (3) de largeur adaptée est disposée dans chaque région d'ouverture (3').

2. Tête de manchon suivant la revendication 1, caractérisé en ce que la pièce de remplissage (3) est fixée sur le câble (12).

3. Tête de manchon suivant l'une des revendications précédentes, caractérisé en ce que la pièce de remplissage (3) est en métal.

4. Tête de manchon suivant l'une des revendications précédentes, caractérisé en ce que la pièce de remplissage (3) présente un revêtement en adhésifs de scellement (13).

5. Tête de manchon suivant l'une des revendications précédentes, caractérisé en ce que la pièce de remplissage (3) présente des possibilités de fixation (4) de serre-câble ou d'écrans de câble.

6. Tête de manchon suivant l'une des revendications précédentes, caractérisé en ce que la pièce de remplissage (3) présente des possibilités de fixation (4) par des barres de fonction entre les têtes de manchon (1).

7. Tête de manchon suivant l'une des revendications précédentes, caractérisé en ce que des moyens de serrage (5, 15) sont disposés sur sa surface latérale cylindrique extérieure.

8. Tête de manchon suivant l'une des revendications précédentes, caractérisé en ce que le cylindre (11) formant manchon coiffant est en un matériau rétractable.

9. Tête de manchon suivant l'une des revendications 1 à 7, caractérisé en ce que le cylindre formant manchon (11) coiffant est en matériau qui n'est pas rétractable.

10. Tête de manchon suivant la revendication 9, caractérisé en ce que des pièces de ceinturage (5, 15) de type à bride, ayant une gorge d'étanchéité (6), qui est dirigée radialement vers l'extérieur et dans laquelle sont introduits des agents de scellement (10) destinés à réaliser l'étanchéité vis-à-vis du tube cylindrique formant manchon (11) coiffant. sont disposées sur la surface cylindrique extérieure de ce dernier.

11. Tête de manchon suivant la revendication 10, caractérisé en ce que les extrémités des pièces de ceinturage (5) de type à bride sont biseautées transversalement à la direction de ceinturage.

FIG 1

FIG 2

FIG3

14
16
15
6
1
8

FIG4

14
17
15
1

FIG5

1
5
5
7
6
13
7